# EUROPEAN PATENT APPLICATION

(11) **EP 4 376 498 A1**
(43) Date of publication of application: **29.05.2024**
(21) Application number: 21950487.5
(22) Date of filing: 21.07.2021
(51) Int. Cl.: H04W 52/02

(54) **AUXILIARY CONFIGURATION METHOD AND APPARATUS THEREOF**

(71) Applicant: Beijing Xiaomi Mobile Software Co., Ltd., Beijing 100085 (CN)
(72) Inventor: YANG, Xing, Beijing 100085 (CN)
(74) Representative: Stöckeler, Ferdinand
(86) International application number: PCT/CN2021/107708
(87) International publication number: WO 2023/000230

(57) **Abstract**

The present disclosure provides an auxiliary configuration method and an apparatus thereof, which belong to the technical field of wireless communications. The method comprises: a terminal device reports sidelink discontinuous reception (sidelink DRX) information to a network device, the sidelink DRX information being sidelink DRX information of a specified sidelink address, and/or sidelink DRX information of a specified sending means. Therefore, the network device may obtain the sidelink DRX information used by the terminal device, so that Uu DRX configuration processing may be performed on the terminal device according to the sidelink DRX information, such that Uu DRX is aligned with sidelink DRX, that is, the activation time of the Uu DRX is aligned with that of the sidelink DRX, so that the terminal device communicates with the network device or other terminal devices during an activation stage or an activation period of the sidelink DRX, which not only can improve transmission reliability, but can also reduce the power consumption of the terminal device.

## Description

### TECHNICAL FIELD

The disclosure relates to the field of wireless communication technology, in particular to an auxiliary configuration method and an auxiliary configuration apparatus.

### BACKGROUND

In the related art, in order to support direct communication between a terminal device (User Equipment, UE) and UE, a sidelink (SL) communication method is introduced. According to a correspondence between a sending UE and a receiving UE, three transmission modes are supported on the sidelink, i.e., unicast, multicast, and broadcast.

During broadcasting and groupcasting, if the receiving UE does not send information to a broadcast address or a groupcast address of the sending UE, and receives information only, the receiving UE may not send the address of the sending UE to a network device by carrying the address of the sending UE in sidelink sending resource request information. In this way, the network device does not know which kind of sidelink Discontinuous Reception (DRX) configuration is used by the receiving UE to receive information, so that an alignment process between the sidelink DRX and Uu DRX cannot be performed, which makes it difficult to save power consumption of the receiving UE.

### SUMMARY

Embodiments of a first aspect of the disclosure provide an auxiliary configuration method, performed by a terminal device. The method includes: sending sidelink DRX information to a network device, in which the sidelink DRX information includes sidelink DRX information of a designated sidelink address, and/or, sidelink DRX information of a designated sending mode.

Optionally, the designated sidelink address includes at least one of: a broadcast address, a groupcast address, and a unicast address.

Optionally, the designated sidelink address satisfies at least one of the following conditions:
the terminal device receiving information sent by the designated sidelink address;
the terminal device receiving information sent by the designated sidelink address and the terminal device not sending the designated sidelink address to the network device;
the terminal device receiving information sent by the designated sidelink address and the information being received using a sidelink DRX mechanism; or
the terminal device receiving information sent by the designated sidelink address, the information being received using the sidelink DRX mechanism, and the terminal device not sending the designated sidelink address to the network device.

Optionally, the terminal device determines whether to send the designated sidelink address to the network device according to at least one of the following modes:
whether the terminal device carries the designated sidelink address in a sidelink terminal device message sent to the network device; or
whether the terminal device carries the sidelink address in a sidelink sending resource request sent to the network device.

Optionally, the sidelink DRX information includes at least one of:

Quality of Service (QoS) characteristic information of a transmission service on the designated sidelink address;
sidelink DRX configuration information on the designated sidelink address;
first indication information for indicating whether the designated sidelink address uses a sidelink DRX mechanism; or
second indication information for indicating whether a designated terminal device exists, in which the designated terminal device receives information sent by the designated sidelink address and conforms to an R16 standard.

Optionally, the QoS characteristic information includes at least one of:
QoS requirement information; or
an index number in a PC5 QoS Identifier (PQI) list, in which the index number has corresponding QoS requirement information.

Optionally, the designated sending mode includes at least one of: a broadcast sending mode, a groupcast sending mode, and a unicast sending mode.

Optionally, the sidelink DRX information of the designated sending mode is determined according to sidelink DRX information of a designated sidelink address having the designated sending mode.

Optionally, the sidelink DRX information of the designated sending mode is a collection of the sidelink DRX information of the designated sidelink address having the designated sending mode.

Embodiments of a second aspect of the disclosure provide an auxiliary configuration method, performed by a network device. The method includes: receiving sidelink DRX information sent by a terminal device, in which the sidelink DRX information includes sidelink DRX information of a designated sidelink address, and/or, sidelink DRX information of a designated sending mode.

Optionally, the method further includes:
performing Uu DRX configuration processing on the terminal device according to the sidelink DRX information.

Optionally, the designated sidelink address includes at least one of: a broadcast address, a groupcast address, and a unicast address.

Optionally, the designated sidelink address satisfies at least one of the following conditions:
the terminal device receiving information sent by the designated sidelink address;
the terminal device receiving information sent by the designated sidelink address and the terminal device not sending the designated sidelink address to the network device;
the terminal device receiving information sent by the designated sidelink address and the information being received using a sidelink DRX mechanism; or
the terminal device receiving information sent by the designated sidelink address, the information being received using the sidelink DRX mechanism and the terminal device not sending the designated sidelink address to the network device.

Optionally, the terminal device determines whether to send the designated sidelink address to the network device according to at least one of the following modes:
whether the terminal device carries the designated sidelink address in a sidelink terminal device message sent to the network device; or
whether the terminal device carries the sidelink address in a sidelink sending resource request sent to the network device.

Optionally, the sidelink DRX information includes at least one of:
QoS characteristic information of a transmission service on the designated sidelink address;
sidelink DRX configuration information on the designated sidelink address;
first indication information for indicating whether the designated sidelink address uses a sidelink DRX mechanism; or
second indication information for indicating whether a designated terminal device exists, in which the designated terminal device receives information sent by the designated sidelink address and conforms to an R16 standard.

Optionally, the QoS characteristic information includes at least one of:
QoS requirement information; or
an index number in a PQI list, in which the index number has corresponding QoS requirement information.

Optionally, the designated sending mode includes at least one of: a broadcast sending mode, a groupcast sending mode, and a unicast sending mode.

Optionally, the sidelink DRX information of the designated sending mode is determined according to sidelink DRX information of a designated sidelink address having the designated sending mode.

Optionally, the sidelink DRX information of the designated sending mode is a collection of the sidelink DRX information of the designated sidelink address having the designated sending mode.

Embodiments of a third aspect of the disclosure provide an auxiliary configuration apparatus, applied to a terminal device. The apparatus includes: a transceiver unit, configured to send sidelink DRX information to a network device, in which the sidelink DRX information includes sidelink DRX information of a designated sidelink address, and/or, sidelink DRX information of a designated sending mode.

Embodiments of a fourth aspect of the disclosure provide an auxiliary configuration apparatus, applied to a network device. The apparatus includes: a transceiver unit, configured to receive sidelink DRX information sent by a terminal device, in which the sidelink DRX information is sidelink DRX information of a designated sidelink address, and/or, sidelink DRX information of a designated sending mode.

Embodiments of a fifth aspect of the disclosure provide a communication device. The communication device includes: a transceiver, a memory, and a processor connected to the transceiver and the memory, respectively. The processor is configured to control transmitting and receiving of radio signals of the transceiver by executing computer-executable instructions stored on the memory and capable of realizing the auxiliary configuration method provided by embodiments of the first aspect of the disclosure.

Embodiments of a sixth aspect of the disclosure provide a communication device. The communication device includes: a transceiver, a memory, and a processor connected to the transceiver and the memory, respectively. The processor is configured to control transmitting and receiving of radio signals of the transceiver by executing computer-executable instructions stored on the memory and capable of realizing the auxiliary configuration method provided by embodiments of the second aspect of the disclosure.

Embodiments of a seventh aspect of the disclosure provide a communication device. The communication device includes: a processor and an interface circuit. The interface circuit is configured to receive code instructions and transmit them to the processor. The processor is configured to run the code instructions to perform the method described in embodiments of the first aspect of the disclosure.

Embodiments of an eighth aspect of the disclosure provide a communication device. The communication device includes: a processor and an interface circuit. The interface circuit is configured to receive code instructions and transmit them to the processor. The processor is configured to run the code instructions to perform the method described in embodiments of the second aspect of the disclosure.

Embodiments of a ninth aspect of the disclosure provide a computer storage medium having computer-executable instructions stored thereon. When the computer-executable instructions are executed by a processor, the auxiliary configuration method of embodiments of the first aspect of the disclosure is implemented.

Embodiments of a tenth aspect of the disclosure provide a computer storage medium having computer-executable instructions stored thereon. When the computer-executable instructions are executed by a processor, the auxiliary configuration method of embodiments of the second aspect of the disclosure is implemented.

Embodiments of an eleventh aspect of the disclosure provide a computer program product including a computer program. When the computer program is executed by a processor, the auxiliary configuration method of embodiments of the first aspect of the disclosure is implemented.

Embodiments of a twelfth aspect of the disclosure provide a computer program product including a computer program. When the computer program is executed by a processor, the auxiliary configuration method of embodiments of the second aspect of the disclosure is implemented.

According to the auxiliary configuration method and the auxiliary configuration apparatus provided in the embodiments of the disclosure, the terminal device sends the sidelink DRX information to the network device. The sidelink DRX information includes the sidelink DRX information of the designated sidelink address, and/or, the sidelink DRX information of the designated sending mode. In this way, the network device can be informed of the sidelink DRX information used by the terminal device, and Uu DRX configuration processing can be performed on the terminal device according to the sidelink DRX information, to align Uu DRX with sidelink DRX, i.e., to align activation periods of the Uu DRX and the sidelink DRX, so that the terminal device can communicate with the network device or other terminal devices during an activation phase or an activation period of the sidelink DRX, which not only improves the reliability of transmission, but also saves the power consumption of the terminal device.

Additional aspects and advantages of the disclosure will be given in part in the following descriptions, become apparent in part from the following descriptions, or be learned from the practice of the disclosure.

### BRIEF DESCRIPTION OF THE DRAWINGS

These and other aspects and advantages of the disclosure will become apparent and more readily appreciated from the following descriptions made with reference to the accompanying drawings, in which:
FIG. 1 is a flowchart of an auxiliary configuration method provided by an embodiment of the disclosure.
FIG. 2 is a flowchart of an auxiliary configuration method provided by an embodiment of the disclosure.
FIG. 3 is a flowchart of an auxiliary configuration method provided by an embodiment of the disclosure.
FIG. 4 is a flowchart of an auxiliary configuration method provided by an embodiment of the disclosure.
FIG. 5 is a flowchart of an auxiliary configuration method provided by an embodiment of the disclosure.
FIG. 6 is a block diagram of an auxiliary configuration apparatus provided by an embodiment of the disclosure.
FIG. 7 is a block diagram of an auxiliary configuration apparatus provided by an embodiment of the disclosure.
FIG. 8 is a block diagram of a terminal device provided by an embodiment of the disclosure.
FIG. 9 is a schematic diagram of a network device provided by an embodiment of the disclosure.

### DETAILED DESCRIPTION

Reference will now be made in detail to embodiments, examples of which are illustrated in the accompanying drawings. The following description refers to the accompanying drawings in which the same numbers in different drawings represent the same or similar elements unless otherwise represented. The implementations set forth in the following description of exemplary embodiments do not represent all implementations consistent with the embodiments of the disclosure. Instead, they are merely examples of apparatuses and methods consistent with aspects related to the embodiments of the disclosure as recited in the appended claims.

The terms used in the embodiments of the disclosure are only for the purpose of describing specific embodiments, and are not intended to limit the embodiments of the disclosure. The singular forms of "a" and "the" used in the embodiments of the disclosure and the appended claims are also intended to include plural forms, unless the context clearly indicates other meanings. It should also be understood that the term "and/or" as used herein refers to and includes any or all possible combinations of one or more associated listed items.

It is understandable that although the terms "first", "second", and "third" may be used in the embodiments of the disclosure to describe various information, the information should not be limited to these terms. These terms are only used to distinguish the same type of information from each other. For example, without departing from the scope of the embodiments of the disclosure, the first information may also be referred to as the second information, and similarly, the second information may also be referred to as the first information. Depending on the context, the term "if' as used herein can be interpreted as "when", "while" or "in response to determining".

Embodiments of the disclosure are described in detail below, and examples of the embodiments are shown in the accompanying drawings, in which the same or similar numbers throughout represent the same or similar elements. The embodiments described below with reference to the accompanying drawings are exemplary and are intended to be used to explain the disclosure and are not to be construed as limitations to the disclosure.

In order to support the direct communication between a sending UE and a receiving UE, a sidelink communication method is introduced. A communication interface between the sending UE and the receiving UE is a PC-5 interface. According to a correspondence between the sending UE and the receiving UE, three transmission modes are supported on the sidelink, i.e., unicast, multicast, and broadcast.

If the UE supports a sidelink capability and the UE intends to perform sidelink transmission, the UE (which is called sidelink UE) may report the SL capability of the UE via a sidelink UE message (SidelinkUEInformation message). That is, the sidelink UE in a connected state may send the SidelinkUEInformation message to a network device. The SidelinkUEInformation message includes sidelink sending resource request information. The sidelink sending resource request information is in a form of a list, and each element in the list is a sidelink sending characteristic of a target UE in communication with the sidelink UE. The sidelink sending characteristic includes a sidelink identification (ID) of the target UE, a corresponding transmission mode (including unicast, multicast, and broadcast), a QoS, and a target transmitting frequency. The SidelinkUEInformation message may also include a list of sidelink reception frequencies for indicating at which frequency the target UE receives the sidelink communication.

On a Uu interface, in order to save power consumption of the UE, the network device can configure DRX for the UE. For this purpose, sidelink DRX is introduced in a R17 standard. For broadcast and groupcast, a sidelink DRX configuration of the receiving UE is determined according to a service type, and the sidelink DRX configuration includes a timer and a cycle. For the unicast, the sidelink DRX configuration of the receiving UE is configured by the sending UE or a base station of the sending UE. The receiving UE monitors a Physical sidelink Control Channel (PSCCH) only during an activation period and it is in a sleep mode during a non-activation period, to save energy.

In order to enhance the effect of energy saving, the sidelink DRX of the UE for groupcast, broadcast and unicast may be aligned, and the sidelink DRX of the UE may be aligned with the DRX of Uu. That is, the activation periods are coincided.

Communication between a sidelink UE that conforms to the R17 standard and a sidelink UE that conforms to the R16 standard also needs to be supported. However, the sidelink UE that conforms to the R16 standard does not support the sidelink DRX mechanism. When the UE that conforms to the R17 standard receives sidelink broadcast or groupcast from the UE that conforms to the R16 standard, the UE that conforms to the R17 standard cannot use the sidelink DRX mechanism and needs to monitor the sidelink channel all the time. When the UE that conforms to the R17 standard sends sidelink broadcast or groupcast to a target address that contains the UE that conforms to the R16 standard, it does not need to take into account the limitation of the activation period of the sidelink DRX.

In broadcasting and groupcasting, if the receiving UE does not send information to a broadcast address or a groupcast address of the sending UE, and receives information only, the receiving UE does not report an address of the sending UE to the network device, and thus the network device does not know which sidelink DRX configuration is used by the receiving UE to receive information, so that the sidelink DRX and the Uu DRX cannot be aligned, which makes it difficult to save the power consumption of the receiving UE.

In view of the above problem, the disclosure provides an auxiliary configuration method and an auxiliary configuration apparatus.

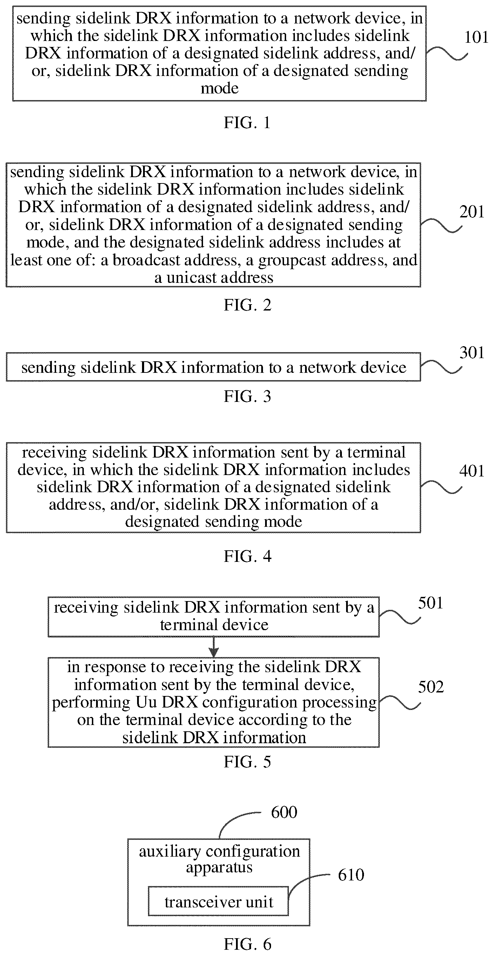

FIG. 1 is a flowchart of an auxiliary configuration method provided by an embodiment of the disclosure. This auxiliary configuration method is performed by a terminal device.

The terminal device may be a device that provides voice and/or data connectivity to a user, a handheld device with a wireless connection function, or other processing devices connected to a wireless modem. The name of the terminal device may vary in different systems. For example, in a 5G system, the terminal device may be referred to as a UE. A wireless terminal device may communicate with one or more Core Networks (CNs) via a Radio Access Network (RAN). The wireless terminal device may be a mobile terminal device, such as a cell phone (or a "cellular" phone) and a computer having the mobile terminal device. For example, it may be a portable, pocket-sized, handheld, computer-built-in, or vehicle-mounted mobile device that exchanges voice and/or data with the RAN.

For example, the terminal device may be a Personal Communication Service (PCS) phone, a cordless phone, a Session Initiated Protocol (SIP) phone, a Wireless Local Loop (WLL) station, a Personal Digital Assistant (PDA) and other devices. The wireless terminal device can also be called a system, a subscriber unit, a subscriber station, a mobile station, a mobile, a remote station, an access point, a remote terminal, an access terminal, a user terminal, a user agent, or a user device, which is not limited in the embodiments of the disclosure.

As illustrated in FIG. 1, the auxiliary configuration method includes the following steps.

At step 101, sidelink DRX information is sent to a network device, in which the sidelink DRX information includes sidelink DRX information of a designated sidelink address, and/or, sidelink DRX information of a designated sending mode.

For example, in embodiments of the disclosure, the network side device is a base station. The base station may include a plurality of cells that provide services to the UE. Depending on the specific application scenario, each cell may contain multiple Transmission Reception Points (TRPs, or Transmit Receive Points). Each TRP may contain one or more antenna panels, or may be a device that communicates with a wireless terminal device over one or more sectors on a radio interface in the RAN, or may be called other names. For example, the base station involved in embodiments of the disclosure may be a Base Transceiver Station (BTS) in a Global System for Mobile communications (GSM) or a Code Division Multiple Access (CDMA), a base station (NodeB) in a Wide-band Code Division Multiple Access (WCDMA), an evolutional Node B (eNB or e-NodeB) in a long term evolution (LTE) system, a 5G base station (gNB) in a 5G network architecture or a next generation system, a Home evolved Node B (HeNB), a relay node, a femto, or a pico, etc. which is not limited in the embodiments of the disclosure.

In embodiments of the disclosure, the terminal device (e.g., a receiving UE) may report the sidelink DRX information to the network device. The sidelink DRX information may be sidelink DRX information of a designated sidelink address, and/or, sidelink DRX information of a designated sending mode.

In embodiments of the disclosure, after receiving the sidelink DRX information, the network device may perform Uu DRX configuration processing on the terminal device according to the sidelink DRX information, to align the Uu DRX with the sidelink DRX, i.e., to align the activation periods of the Uu DRX and the sidelink DRX, so that the terminal device can communicate with the network device or other terminal devices during an activation phase or an activation period of the sidelink DRX, which not only improves the reliability of transmission, but also saves the power consumption of the terminal device.

According to the auxiliary configuration method of embodiments of the disclosure, the terminal device sends the sidelink DRX information to the network device. The sidelink DRX information includes the sidelink DRX information of a designated sidelink address, and/or, sidelink DRX information of a designated sending mode. In this way, the network device can be informed of the sidelink DRX information used by the terminal device, and the Uu DRX configuration processing can be performed on the terminal device according to the sidelink DRX information, to align the Uu DRX with the sidelink DRX, i.e., to align activation periods of the Uu DRX and the sidelink DRX, so that the terminal device can communicate with the network device or other terminal devices during an activation phase or an activation period of the sidelink DRX, which not only improves the reliability of transmission, but also saves the power consumption of the terminal device.

It should be noted that these possible implementations described above may be implemented independently or in combination, which is not limited in the embodiments of the disclosure.

Embodiments of the disclosure also provide another auxiliary configuration method. FIG. 2 is a flowchart of an auxiliary configuration method provided by an embodiment of the disclosure. This auxiliary configuration method is performed by a terminal device. The auxiliary configuration method may be implemented independently, or in combination with any of the embodiments or any possible implementation of the embodiments in the disclosure, or in combination with any of the technical solutions in the related art.

As illustrated in FIG. 2, the auxiliary configuration method includes the following steps.

At step 201, sidelink DRX information is sent to a network device, in which the sidelink DRX information includes sidelink DRX information of a designated sidelink address, and/or, sidelink DRX information of a designated sending mode, and the designated sidelink address includes at least one of: a broadcast address, a groupcast address, and a unicast address.

In embodiments of the disclosure, the designated sending mode may include at least one of: a broadcast sending mode, a groupcast sending mode, and a unicast sending mode.

In embodiments of the disclosure, the designated sidelink address may include: a broadcast address, a groupcast address, or a unicast address (for example, can be determined through a sidelink ID of the terminal device).

In a possible implementation of embodiments of the disclosure, the designated sidelink address may satisfy at least one of the following conditions.

The first condition is that the terminal device receives information sent by the designated sidelink address.

For example, the terminal device (e.g., a receiving UE) receives information sent by a sending UE through the designated sidelink address.

The second condition is that the terminal device receives information sent by the designated sidelink address, and the terminal device does not send the designated sidelink address to the network device.

For example, the terminal device (e.g., the receiving UE) receives information sent by the sending UE through the designated sidelink address, but the designated sidelink address is not included in a sidelink sending resource request reported by the receiving UE to the network device.

The third condition is that the terminal device receives information sent by the designated sidelink address, and the information is received using a sidelink DRX mechanism.

For example, the terminal device (e.g., the receiving UE) receives the information sent by the sending UE through the designated sidelink address, and the receiving UE receives the information sent by the designated sidelink address using the sidelink DRX mechanism.

The fourth condition is that the terminal device receives information sent by the designated sidelink address, the information is received using the sidelink DRX mechanism, and the terminal device does not send the designated sidelink address to the network device.

For example, the terminal device (e.g., the receiving UE) receives the information sent by the sending UE through the designated sidelink address, and the receiving UE receives the information sent by the designated sidelink address using the sidelink DRX mechanism. However, the designated sidelink address is not included in the sidelink sending resource request reported by the receiving UE to the network device.

In a possible implementation, when the terminal device (e.g., the receiving UE) receives information sent by the receiving UE that conforms to the R16 standard through the designated sidelink address, the terminal device does not use the sidelink DRX mechanism to receive the information sent by the designated sidelink address.

In another possible implementation, when the terminal device (e.g., the receiving UE) receives information sent by the receiving UE that conforms to the R17 standard through the designated sidelink address, the terminal device uses the sidelink DRX mechanism to receive the information sent by the designated sidelink address.

In a possible implementation of embodiments of the disclosure, the following ways can be used to determine whether the terminal device sends the designated sidelink address to the network device.

The first way is to determine whether the terminal device carries the designated sidelink address in a SidelinkUEInformation message sent to the network device.

For example, in response to determining that the terminal device intends to send the designated sidelink address to the network device, the terminal device may carry the designated sidelink address in the SidelinkUEInformation message and send the SidelinkUEInformation message carrying the designated sidelink address to the network device. For another example, in response to determining, by the terminal device, that it is not necessary to send the designated sidelink address to the network device, the SidelinkUEInformation message sent by the terminal device to the network device may not carry the designated sidelink address.

The second way is to determine whether the terminal device carries the sidelink address in a sidelink sending resource request sent to the network device.

For example, in response to determining that the terminal device intends to send the designated sidelink address to the network device, the terminal device may carry the designated sidelink address in the sidelink sending resource request and send the sidelink sending resource request carrying the designated sidelink address to the network device. For another example, in response to determining that the terminal device does not need to send the designated sidelink address to the network device, the sidelink sending resource request sent by the terminal device to the network device may not carry the designated sidelink address.

According to the auxiliary configuration method of embodiments of the disclosure, the terminal device reports the sidelink DRX information to the network device. The sidelink DRX information is sidelink DRX information of a designated sidelink address, and/or, sidelink DRX information of a designated sending mode. In this way, the network device can be informed of the sidelink DRX information used by the terminal device, and Uu DRX configuration processing can be performed on the terminal device according to the sidelink DRX information, to align the Uu DRX with sidelink DRX, i.e., to align activation periods of the Uu DRX and the sidelink DRX, so that the terminal device can communicate with the network device or other terminal devices during an activation phase or an activation period of the sidelink DRX, which not only improves the reliability of transmission, but also saves the power consumption of the terminal device.

It should be noted that these possible implementations described above may be implemented independently or in combination, which is not limited in the embodiments of the disclosure.

Embodiments of the disclosure also provide another auxiliary configuration method. FIG. 3 is a flowchart of an auxiliary configuration method provided by an embodiment of the disclosure. This auxiliary configuration method is performed by a terminal device. The auxiliary configuration method may be implemented independently, or in combination with any of the embodiments or any possible implementation of the embodiments in the disclosure, or in combination with any of the technical solutions in the related art.

As illustrated in FIG. 3, the auxiliary configuration method includes the following steps.

At step 301, sidelink DRX information is sent to a network device.

It should be understood that in some possible implementations, the sidelink DRX information includes sidelink DRX information of a designated sidelink address, and/or, sidelink DRX information of a designated sending mode. The explanatory illustrations of the designated sidelink address and the designated sending mode in any of the preceding embodiments is also applicable to this embodiment and will not be repeated herein.

In embodiments of the disclosure, the sidelink DRX information may include at least one of the following types of information.

The first type is QoS characteristic information of a transmission service on the designated sidelink address.

The QoS characteristic information may include QoS requirement information and/or an index number in a PC5 QoS Identifier (PQI) list. The QoS requirement information may include QoS requirements, such as a transmission delay and a transmission rate, and the index number in the PQI list has corresponding QoS requirement information.

For example, the index number 1 in the PQI list corresponds to the QoS requirement 1, and the index number 2 corresponds to the QoS requirement 2. The transmission delays corresponding to the QoS requirement 1 and the QoS requirement 2 can be different, and the transmission rates corresponding to the QoS requirement 1 and the QoS requirement 2 can be different. For example, the index number in the PQI list is 2, it is determined that the QoS characteristic information of a transmission service on the designated sidelink address is the QoS requirement 2.

The second type is sidelink DRX configuration information on the designated sidelink address.

The sidelink DRX configuration information on the designated sidelink address may include configuration information, such as a sidelink DRX cycle, and a timer duration.

The third type is first indication information for indicating whether the designated sidelink address uses a sidelink DRX mechanism.

For example, in the case where there is a terminal device that conforms to the R16 standard in terminal devices that receive the information sent by the designated sidelink address, the first indication information may indicate that the designated sidelink address does not use the sidelink DRX mechanism.

For example, in the case where there is no terminal device that conforms to the R16 standard (e.g., all the terminal devices conform to the R17 standard) in terminal devices that receive the information sent by the designated sidelink address, the first indication information may indicate that the designated sidelink address uses the sidelink DRX mechanism.

The fourth type is second indication information for indicating whether a designated terminal device exists, in which the designated terminal device receives information sent by the designated sidelink address and conforms to an R16 standard.

For example, in the case where there is a terminal device that conforms to the R16 standard in terminal devices that receive the information sent by the designated sidelink address, the second indication information may indicate that the designated terminal device exists.

For example, in the case where there is no terminal device that conforms to the R16 standard (e.g., the terminal device that conforms to the R17 standard) in terminal devices that receive the information sent by the designated sidelink address, for example, all the terminal devices that receive the information sent by the designated sidelink address conform to the R17 standard, the second indication information may indicate that no designated terminal device exists.

In a possible implementation of embodiments of the disclosure, the sidelink DRX information of a designated sending mode may be determined according to sidelink DRX information of a designated sidelink address having the designated sending mode.

As a possible implementation, the sidelink DRX information of the designated sending mode may be a collection of sidelink DRX information of the designated sidelink address having the designated sending mode. For example, the collection may include sidelink DRX information of all designated sidelink addresses having the designated sending mode.

For example, the designated sending mode is a unicast sending mode, and the exemplary illustration is made as following. If UE1 communicates with three devices, i.e., UE2, UE3 and UE4, respectively via the unicast sending mode, the sidelink DRX information of the designated sending mode may include the sidelink DRX information corresponding to the three devices, i.e., UE2, UE3 and UE4.

It should be noted that for a certain designated sending mode, if there is a designated sidelink address in the designated sending mode that does not use the sidelink DRX mechanism, the designated sending mode does not use the sidelink DRX mechanism.

Still taking the above example as an example, if UE2 and UE3 use the sidelink DRX mechanism and UE4 does not support a sleep mode or a dormant mode, i.e., UE4 does not use the sidelink DRX mechanism, the unicast sending mode does not use the sidelink DRX mechanism.

For example, in the case where the designated sending mode uses the sidelink DRX mechanism, the sidelink DRX information may include at least one of the above four types of information. For example, it may include all of the above four types of information at the same time. For the third type of information, the first indication information may be used to indicate that the designated sidelink address uses the sidelink DRX mechanism. For the fourth type of information, the second indication information may be used to indicate that no designated terminal device exists. In the case where the designated sending mode does not use the sidelink DRX mechanism, the sidelink DRX information may include the third type of information and/or the fourth type of information described above. For the third type of information, the first indication information may be used to indicate that the designated sidelink address does not use the sidelink DRX mechanism. For the fourth type of information, the second indication information may be used to indicate that the designated terminal device exists.

In any one of the embodiments of the disclosure, the designated sending mode may be a sending mode used by the designated sidelink address. In the auxiliary configuration method of embodiments of the disclosure, the terminal device sends the sidelink DRX information to the network device. The sidelink DRX information is sidelink DRX information of a designated sidelink address, and/or, sidelink DRX information of a designated sending mode. In this way, the network device can be informed of the sidelink DRX information used by the terminal device, and Uu DRX configuration processing can be performed on the terminal device according to the sidelink DRX information, to align the Uu DRX with the sidelink DRX, i.e., to align activation periods of the Uu DRX and the sidelink DRX, so that the terminal device can communicate with the network device or other terminal devices during an activation phase or an activation period of the sidelink DRX, which not only improves the reliability of transmission, but also saves the power consumption of the terminal device.

It should be noted that these possible implementations described above may be implemented independently or in combination, which is not limited in the embodiments of the disclosure.

Embodiments of the disclosure also provide another auxiliary configuration method. FIG. 4 is a flowchart of an auxiliary configuration method provided by an embodiment of the disclosure. This auxiliary configuration method is performed by a network device. The auxiliary configuration method may be implemented independently, or in combination with any of the embodiments or any possible implementation of the embodiments in the disclosure, or in combination with any of the technical solutions in the related art.

As illustrated in FIG. 4, the auxiliary configuration method includes the following steps.

At step 401, sidelink DRX information sent by a terminal device is received, in which the sidelink DRX information includes sidelink DRX information of a designated sidelink address, and/or, sidelink DRX information of a designated sending mode.

In embodiments of the disclosure, the terminal device (e.g., a receiving UE) may send the sidelink DRX information to the network device. The sidelink DRX information may include the sidelink DRX information of a designated sidelink address, and/or, the sidelink DRX information of a designated sending mode. Correspondingly, the network device may receive the sidelink DRX information sent by the terminal device.

In a possible implementation of embodiments of the disclosure, the designated sidelink address may include at least one of: a broadcast address, a groupcast address, and a unicast address.

In a possible implementation of embodiments of the disclosure, the designated sidelink address satisfies at least one of the following conditions.

The first condition is that the terminal device receives information sent by the designated sidelink address.

The second condition is that the terminal device receives information sent by the designated sidelink address, and the terminal device does not send the designated sidelink address to the network device.

The third condition is that the terminal device receives information sent by the designated sidelink address, and the information is received using a sidelink DRX mechanism.

The fourth condition is that the terminal device receives information sent by the designated sidelink address, the information is received using the sidelink DRX mechanism, and the terminal device does not send the designated sidelink address to the network device.

In a possible implementation of embodiments of the disclosure, the terminal device may use at least one of the following ways to determine whether to send the designated sidelink address to the network device.

The first way is to determine whether the terminal device carries the designated sidelink address in a sidelink terminal device message (SidelinkUEInformation) sent to the network device.

The second way is to determine whether the terminal device carries the sidelink address in a sidelink sending resource request sent to the network device.

In a possible implementation of embodiments of the disclosure, the sidelink DRX information may include at least one of the following types of information.

The first type is QoS characteristic information of a transmission service on the designated sidelink address.

The second type is sidelink DRX configuration information on the designated sidelink address.

The third type is first indication information for indicating whether the designated sidelink address uses a sidelink DRX mechanism.

The fourth type is second indication information for indicating whether a designated terminal device exists, in which the designated terminal device receives information sent by the designated sidelink address and conforms to an R16 standard.

In a possible implementation of embodiments of the disclosure, the QoS characteristic information may include at least one of the following parameters: QoS requirement information or an index number in a PQI list. The index number has corresponding QoS requirement information.

In a possible implementation of embodiments of the disclosure, the designated sending mode may include at least one of: a broadcast sending mode, a groupcast sending mode, and a unicast sending mode.

In a possible implementation of embodiments of the disclosure, the sidelink DRX information of the designated sending mode may be determined according to sidelink DRX information of a designated sidelink address having the designated sending mode.

In a possible implementation of embodiments of the disclosure, the sidelink DRX information of the designated sending mode may be a collection of the sidelink DRX information of the designated sidelink address having the designated sending mode.

It is noted that the explanatory description of the auxiliary configuration method performed on the terminal device side in any of the aforementioned embodiments of FIGS. 1 to 3 is also applicable to the auxiliary configuration method performed on the network device side in this embodiment, which is realized according to similar principles and will not be repeated here.

According to the auxiliary configuration method of embodiments of the disclosure, the network device receives the sidelink DRX information sent by the terminal device. The sidelink DRX information includes sidelink DRX information of a designated sidelink address, and/or, sidelink DRX information of a designated sending mode. In this way, the network device can be informed of the sidelink DRX information used by the terminal device, and Uu DRX configuration processing can be performed on the terminal device according to the sidelink DRX information, to align the Uu DRX with the sidelink DRX, i.e., to align activation periods of the Uu DRX and the sidelink DRX, so that the terminal device can communicate with the network device or other terminal devices during an activation phase or an activation period of the sidelink DRX, which not only improves the reliability of transmission, but also saves the power consumption of the terminal device.

It should be noted that these possible implementations described above may be implemented independently or in combination, which is not limited in the embodiments of the disclosure.

Embodiments of the disclosure also provide another auxiliary configuration method shown in FIG. 5. FIG. 5 is a flowchart of an auxiliary configuration method provided by an embodiment of the disclosure. This auxiliary configuration method is performed by a network device. The auxiliary configuration method may be implemented independently, or in combination with any of the embodiments or any possible implementation of the embodiments in the disclosure, or in combination with any of the technical solutions in the related art.

As illustrated in FIG. 5, the auxiliary configuration method includes the following steps.

At step 501, sidelink DRX information sent by a terminal device is received.

In some possible implementations of the disclosure, the sidelink DRX information sent by the terminal device includes sidelink DRX information of a designated sidelink address, and/or, sidelink DRX information of a designated sending mode.

It should be noted that step 501 is similar to the aforementioned step 401, and thus the explanatory description of step 401 is also applicable to step 501, which is realized in a similar principle and will not be repeated here.

At step 502, in response to receiving the sidelink DRX information sent by the terminal device, Uu DRX configuration processing is performed on the terminal device according to the sidelink DRX information.

In a possible implementation of embodiments of the disclosure, after receiving the sidelink DRX information, the network device may perform the Uu DRX configuration processing on the terminal device according to the sidelink DRX information, to align Uu DRX with the sidelink DRX, i.e., to align the activation periods of the Uu DRX and the sidelink DRX, so that the terminal device can communicate with the network device or other terminal devices during an activation phase or an activation period of the sidelink DRX, which not only improves the reliability of transmission, but also saves the power consumption of the terminal device.

According to the auxiliary configuration method of embodiments of the disclosure, the terminal device sends the sidelink DRX information to the network device. The sidelink DRX information includes the sidelink DRX information of a designated sidelink address, and/or, the sidelink DRX information of a designated sending mode. In this way, the network device can be informed of the sidelink DRX information used by the terminal device, and the Uu DRX configuration processing can be performed on the terminal device according to the sidelink DRX information, to align the Uu DRX with the sidelink DRX, i.e., to align activation periods of the Uu DRX and the sidelink DRX, so that the terminal device can communicate with the network device or other terminal devices during an activation phase or an activation period of the sidelink DRX, which not only improves the reliability of transmission, but also saves the power consumption of the terminal device.

It should be noted that these possible implementations described above may be implemented independently or in combination, which is not limited in the embodiments of the disclosure.

Corresponding to the auxiliary configuration method provided in the above-described embodiments of FIGS. 1 to 3, the disclosure also provides an auxiliary configuration apparatus. Since the auxiliary configuration apparatus provided in embodiments of the disclosure corresponds to the auxiliary configuration method provided in the above-described embodiments of FIGS. 1 to 3, the implementations of the auxiliary configuration method are also applicable to the auxiliary configuration apparatus provided in embodiments of the disclosure, which will not be described in detail in the embodiments of the disclosure.

FIG. 6 is a block diagram of an auxiliary configuration apparatus provided by an embodiment of the disclosure. The apparatus is applied to a terminal device.

As illustrated in FIG. 6, the auxiliary configuration apparatus 600 may include: a transceiver unit 610.

The transceiver unit 610 is configured to send sidelink DRX information to a network device, in which the sidelink DRX information includes sidelink DRX information of a designated sidelink address, and/or, sidelink DRX information of a designated sending mode.

Optionally, the designated sidelink address includes at least one of: a broadcast address, a groupcast address, and a unicast address.

Optionally, the designated sidelink address satisfies at least one of the following conditions:

the terminal device receiving information sent by the designated sidelink address;
the terminal device receiving information sent by the designated sidelink address and the terminal device not sending the designated sidelink address to the network device;
the terminal device receiving information sent by the designated sidelink address and the information being received using a sidelink DRX mechanism; or
the terminal device receiving information sent by the designated sidelink address, the information being received using the sidelink DRX mechanism, and the terminal device not sending the designated sidelink address to the network device.

Optionally, the terminal device determines whether to send the designated sidelink address to the network device according to at least one of the following modes:
whether the terminal device carries the designated sidelink address in a sidelink terminal device message (SidelinkUEInformation) sent to the network device; or
whether the terminal device carries the sidelink address in a sidelink sending resource request sent to the network device.

Optionally, the sidelink DRX information includes at least one of:

QoS characteristic information of a transmission service on the designated sidelink address;
sidelink DRX configuration information on the designated sidelink address;
first indication information for indicating whether the designated sidelink address uses a sidelink DRX mechanism; or
second indication information for indicating whether a designated terminal device exists, in which the designated terminal device receives information sent by the designated sidelink address and conforms to an R16 standard.

Optionally, the QoS characteristic information includes at least one of:
QoS requirement information; or
an index number in a PQI list, in which the index number has corresponding QoS requirement information.

Optionally, the designated sending mode includes at least one of: a broadcast sending mode, a groupcast sending mode, and a unicast sending mode.

Optionally, the sidelink DRX information of the designated sending mode is determined according to sidelink DRX information of a designated sidelink address having the designated sending mode.

Optionally, the sidelink DRX information of the designated sending mode is a collection of the sidelink DRX information of the designated sidelink address having the designated sending mode.

With the auxiliary configuration apparatus of embodiments of the disclosure, the terminal device sends the sidelink DRX information to the network device. The sidelink DRX information includes the sidelink DRX information of a designated sidelink address, and/or, the sidelink DRX information of a designated sending mode. In this way, the network device can be informed of the sidelink DRX information used by the terminal device, and Uu DRX configuration processing can be performed on the terminal device according to the sidelink DRX information, to align Uu DRX with the sidelink DRX, i.e., to align activation periods of the Uu DRX and the sidelink DRX, so that the terminal device can communicate with the network device or other terminal devices during an activation phase or an activation period of the sidelink DRX, which not only improves the reliability of transmission, but also saves the power consumption of the terminal device.

Corresponding to the auxiliary configuration method provided in the above-described embodiments of FIGS. 4 to 5, the disclosure also provides an auxiliary configuration apparatus. Since the auxiliary configuration apparatus provided in embodiments of the disclosure corresponds to the auxiliary configuration method provided in the above-described embodiments of FIGS. 4 to 5, the implementations of the auxiliary configuration method are also applicable to the auxiliary configuration apparatus provided in embodiments of the disclosure, which will not be described in detail in the embodiments of the disclosure.

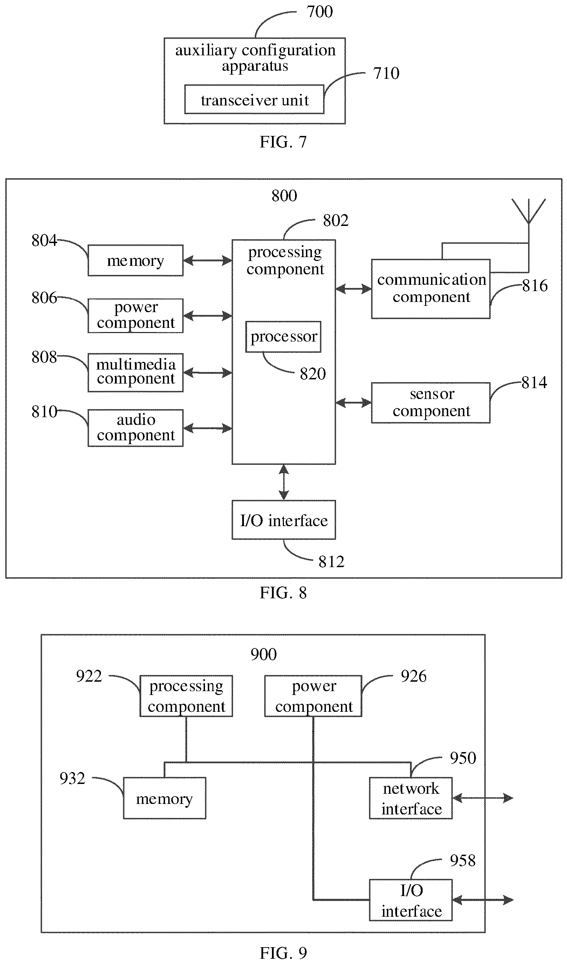

FIG. 7 is a block diagram of an auxiliary configuration apparatus provided by an embodiment of the disclosure. The apparatus is applied to a network device.

As illustrated in FIG. 7, the auxiliary configuration apparatus 700 may include: a transceiver unit 710.

The transceiver unit 710 is configured to receive sidelink DRX information sent by a terminal device, in which the sidelink DRX information includes sidelink DRX information of a designated sidelink address, and/or, sidelink DRX information of a designated sending mode.

Optionally, the auxiliary configuration apparatus 700 may also include:
a processing unit, configured to perform Uu DRX configuration processing on the terminal device according to the sidelink DRX information.

Optionally, the designated sidelink address may include at least one of: a broadcast address, a groupcast address, and a unicast address.

Optionally, the designated sidelink address satisfies at least one of the following conditions:
the terminal device receiving information sent by the designated sidelink address;
the terminal device receiving information sent by the designated sidelink address and the terminal device not sending the designated sidelink address to the network device;
the terminal device receiving information sent by the designated sidelink address and the information being received using a sidelink DRX mechanism; or
the terminal device receiving information sent by the designated sidelink address, the information being received using the sidelink DRX mechanism, and the terminal device not sending the designated sidelink address to the network device.

Optionally, the terminal device determines whether to send the designated sidelink address to the network device according to at least one of the following modes:
whether the terminal device carries the designated sidelink address in a sidelink terminal device message (SidelinkUEInformation) sent to the network device; or
whether the terminal device carries the sidelink address in a sidelink sending resource request sent to the network device.

Optionally, the sidelink DRX information includes at least one of:
QoS characteristic information of a transmission service on the designated sidelink address;
sidelink DRX configuration information on the designated sidelink address;
first indication information for indicating whether the designated sidelink address uses a sidelink DRX mechanism; or
second indication information for indicating whether a designated terminal device exists, in which the designated terminal device receives information sent by the designated sidelink address and conforms to an R16 standard.

Optionally, the QoS characteristic information includes at least one of:
QoS requirement information; or
an index number in a PQI list, in which the index number has corresponding QoS requirement information.

Optionally, the designated sending mode includes at least one of: a broadcast sending mode, a groupcast sending mode, and a unicast sending mode.

Optionally, the sidelink DRX information of the designated sending mode is determined according to sidelink DRX information of a designated sidelink address having the designated sending mode.

Optionally, the sidelink DRX information of the designated sending mode is a collection of the sidelink DRX information of the designated sidelink address having the designated sending mode.

With the auxiliary configuration apparatus of embodiments of the disclosure, the network device receives the sidelink DRX information sent by the terminal device. The sidelink DRX information includes the sidelink DRX information of a designated sidelink address, and/or, the sidelink DRX information of a designated sending mode. In this way, the network device can be informed of the sidelink DRX information used by the terminal device, and the Uu DRX configuration processing can be performed on the terminal device according to the sidelink DRX information, to align the Uu DRX with the sidelink DRX, i.e., to align activation periods of the Uu DRX and the sidelink DRX, so that the terminal device can communicate with the network device or other terminal devices during an activation phase or an activation period of the sidelink DRX, which not only improves the reliability of transmission, but also saves the power consumption of the terminal device.

In order to realize the above embodiments, the disclosure provides a communication device. The communication device includes a processor and a memory having a computer program stored thereon. The processor executes the computer program stored on the memory to cause the device to perform the method described in any of the embodiments of FIGS. 1-3. For example, the communication device may be the terminal device in the above embodiments.

In order to realize the above embodiments, the disclosure provides a communication device. The communication device includes a processor and a memory having a computer program stored thereon. The processor executes the computer program stored on the memory to cause the device to perform the method described in any of the embodiments of FIGS. 4-5. For example, the communication device may be the network device in the above embodiments.

In order to realize the above embodiments, the disclosure provides a communication device. The communication device includes a processor and an interface circuit. The interface circuit is configured to receive code instructions and transmit them to the processor. The processor is configured to execute the code instructions to perform the method described in any of the embodiments of FIGS. 1-3. For example, the communication device may be the terminal device in the above embodiments.

In order to realize the above embodiments, the disclosure provides a communication device. The communication device includes a processor and an interface circuit. The interface circuit is configured to receive code instructions and transmit them to the processor. The processor is configured to execute the code instructions to perform the method described in any of the embodiments of FIGS. 4-5. For example, the communication device may be the network device in the above embodiments.

In order to realize the above embodiments, the disclosure provides a computer-readable storage medium for storing instructions. When the instructions are executed, the method described in any of the embodiments of FIGS. 1-3 is implemented.

In order to realize the above embodiments, the disclosure provides a computer-readable storage medium for storing instructions. When the instructions are executed, the method described in any of the embodiments of FIGS. 4-5 is implemented.

FIG. 8 is a block diagram of a terminal device provided by an embodiment of the disclosure. For example, the terminal device 800 may be a mobile phone, a computer, a digital broadcasting UE, a message transceiver device, a game console, a tablet device, a medical device, a fitness device, and a personal digital assistant.

As illustrated in FIG. 8, the terminal device 800 may include at least one of the following components: a processing component 802, a memory 804, a power component 806, a multimedia component 808, an audio component 810, an input/output (I/O) interface 812, a sensor component 814, and a communication component 816.

The processing component 802 typically controls overall operations of the terminal device 800, such as the operations associated with display, telephone calls, data communications, camera operations, and recording operations. The processing component 802 may include at least one processor 820 to execute instructions to perform all or part of the steps in the above described method. Moreover, the processing component 802 may include at least one module which facilitate the interaction between the processing component 802 and other components. For example, the processing component 802 may include a multimedia module to facilitate the interaction between the multimedia component 808 and the processing component 802.

The memory 804 is configured to store various types of data to support the operation of the terminal device 800. Examples of such data include instructions for any applications or methods operated on the terminal device 800, contact data, phonebook data, messages, pictures, videos, etc. The memory 804 may be implemented using any type of volatile or non-volatile memory devices, or a combination thereof, such as a Static Random-Access Memory (SRAM), an Electrically-Erasable Programmable Read Only Memory (EEPROM), an Erasable Programmable Read Only Memory (EPROM), a Programmable Read Only Memory (PROM), a Read Only Memory (ROM), a magnetic memory, a flash memory, a magnetic or optical disk.

The power component 806 provides power to various components of the terminal device 800. The power component 806 may include a power management system, at least one power source, and any other components associated with the generation, management, and distribution of power in the terminal device 800.

The multimedia component 808 includes a screen providing an output interface between the terminal device 800 and a user. In some embodiments, the screen may include a Liquid Crystal Display (LCD) and a Touch Panel (TP). If the screen includes the touch panel, the screen may be implemented as a touch screen to receive input signals from the user. The touch panel includes at least one touch sensor to sense touches, swipes, and gestures on the touch panel. The touch sensor may not only sense a boundary of a touch or swipe action, but also sense a period of wakeup time and a pressure associated with the touch or swipe action. In some embodiments, the multimedia component 808 includes a front-facing camera and/or a rear-facing camera. When the terminal device 800 is in an operating mode, such as a shooting mode or a video mode, the front-facing camera and/or the rear-facing camera can receive external multimedia data. Each of the front-facing camera and the rear-facing camera may be a fixed optical lens system or has focal length and optical zoom capability.

The audio component 810 is configured to output and/or input audio signals. For example, the audio component 810 includes a microphone (MIC) configured to receive an external audio signal when the terminal device 800 is in an operation mode, such as a call mode, a recording mode, and a voice recognition mode. The received audio signal may be further stored in the memory 804 or transmitted via the communication component 816. In some embodiments, the audio component 810 further includes a speaker to output audio signals.

The I/O interface 812 provides an interface between the processing component 802 and peripheral interface modules, such as a keyboard, a click wheel, buttons, and the like. The buttons may include, but are not limited to, a home button, a volume button, a starting button, and a locking button.

The sensor component 814 includes at least one sensor to provide status assessments of various aspects of the terminal device 800. For instance, the sensor component 814 may detect an open/closed status of the terminal device 800, relative positioning of components, e.g., the display and the keypad, of the terminal device 800, a change in position of the terminal device 800 or a component of the terminal device 800, a presence or absence of a user contact with the terminal device 800, an orientation or an acceleration/deceleration of the terminal device 800, and a change in temperature of the terminal device 800. The sensor component 814 may include a proximity sensor configured to detect the presence of nearby objects without any physical contact. The sensor component 814 may also include a light sensor, such as a Complementary Metal Oxide Semiconductor (CMOS) or Charge-Coupled Device (CCD) image sensor, for using in imaging applications. In some embodiments, the sensor component 814 may also include an accelerometer sensor, a gyroscope sensor, a magnetic sensor, a pressure sensor, or a temperature sensor.

The communication component 816 is configured to facilitate communication, wired or wirelessly, between the terminal device 800 and other devices. The terminal device 800 can access a wireless network based on a communication standard, such as Wi-Fi, 2G or 3G, or a combination thereof. In an embodiment, the communication component 816 receives a broadcast signal from an external broadcast management system or broadcast associated information via a broadcast channel. In an embodiment, the communication component 816 further includes a Near Field Communication (NFC) module to facilitate short-range communication. For example, the NFC module may be implemented based on a RF Identification (RFID) technology, an Infrared Data Association (IrDA) technology, an Ultra-Wide Band (UWB) technology, a Blue Tooth (BT) technology, and other technologies.

In embodiments, the terminal device 800 may be implemented by at least one Application Specific Integrated Circuit (ASIC), Digital Signal Processor (DSP), Digital Signal Processing Device (DSPD), Programmable Logic Device (PLD), Field Programmable Gate Array (FPGA), controller, micro-controller, microprocessor or other electronic components, for performing the above described methods as illustrated in any of FIG. 1 to FIG. 3.

In the exemplary embodiments, there is also provided a non-transitory computer readable storage medium including instructions, such as the memory 804. The instructions are executable by the processor 820 in the terminal device 800, for performing the above method of any of FIG. 1 to FIG. 3. For example, the non-transitory computer-readable storage medium may be a ROM, a Random Access Memory (RAM), a CD-ROM, a magnetic tape, a floppy disc, and an optical data storage device.

FIG. 9 is a block diagram of a network device provided by an embodiment of the disclosure. As illustrated in FIG. 9, the network device 900 includes a processing component 922 consisting of at least one processor, and memory resources represented by a memory 932 for storing instructions executable by the processing component 922, such as applications. The applications stored in the memory 932 may include one or more modules each corresponding to a set of instructions. In addition, the processing component 922 is configured to execute the instructions to perform any of the methods described above that are performed by the network device, for example, the methods as illustrated in any of FIG. 4 to FIG. 5.

The network device 900 may also include a power component 926 configured to perform power management of the network device 900, a wired or wireless network interface 950 configured to connect the network device 900 to a network, and an I/O interface 958. The network device 900 may operate based on an operating system stored in the memory 932, such as Windows Server TM, Mac OS XTM, UnixTM, LinuxTM, FreeBSDTM, or the like.

Other implementations of the disclosure will be apparent to those skilled in the art from consideration of the specification and practice of the disclosure disclosed here. This disclosure is intended to cover any variations, usages, or adaptations of the disclosure following the general principles thereof and including such departures from the disclosure as come within known or customary practice in the art. The specification and examples are considered as illustrative only, with a true scope and spirit of the disclosure being indicated by the following claims.

It will be appreciated that the disclosure is not limited to the exact construction that has been described above and illustrated in the accompanying drawings, and that various modifications and changes can be made without departing from the scope thereof. The scope of the disclosure only be limited by the appended claims.

In order to realize the above embodiments, embodiments of the disclosure also provide a communication device. The communication device may be a network device, a terminal device, or a chip, a chip system or a processor that supports the network device to realize the above-described methods, or a chip, a chip system or a processor that supports the terminal device to realize the above-described methods. The device may be used to realize the methods described in any of the above method embodiments, which may refer to the descriptions of the above-described method embodiments.

The communication device may include one or more processors. The processor may be a general purpose processor or a dedicated processor, such as, a baseband processor or a central processor. The baseband processor is used for processing communication protocols and communication data. The central processor is used for controlling the communication device (e.g., a base station, a baseband chip, a terminal device, a terminal device chip, a central unit (CU) or a distributed unit (DU)), executing computer programs, and processing data of the computer programs.

Optionally, the communication device may include one or more memories on which computer programs may be stored. The processor executes the computer program(s) to cause the communication device to perform the methods described in the above method embodiments. Optionally, data may also be stored in the memory. The communication device and the memory may be provided separately or may be integrated together.

Optionally, the communication device may also include a transceiver and an antenna. The transceiver may be referred to as transceiver unit, a transceiver machine, or a transceiver circuit, for realizing the transceiver function. The transceiver may include a receiver and a transmitter. The receiver may be referred to as a receiver machine or a receiving circuit, for realizing the receiving function. The transmitter may be referred to as a transmitter machine or a transmitting circuit, for realizing the transmitting function.

Optionally, the communication device may also include one or more interface circuits. The interface circuits are used to receive code instructions and transmit them to the processor. The processor runs the code instructions to cause the communication device to perform the method described in any of the method embodiments.

In an implementation, the processor may include a transceiver for implementing the receiving and transmitting functions. The transceiver may be, for example, a transceiver circuit, an interface, or an interface circuit. The transceiver circuit, interface, or interface circuit for implementing the receiving and transmitting functions may be separated or may be integrated together. The transceiver circuit, interface, or interface circuit described above may be used for code/data reading and writing, or may be used for signal transmission or delivery.

In an implementation, the processor may store a computer program, which runs on the processor and may cause the communication device to perform the methods described in any of the method embodiments above. The computer program may be solidified in the processor, in which case the processor may be implemented by hardware.

In an implementation, the communication device may include circuits. The circuits may implement the transmitting, receiving or communicating function in the preceding method embodiments. The processors and transceivers described in this disclosure may be implemented on integrated circuits (ICs), analog ICs, radio frequency integrated circuits (RFICs), mixed signal ICs, application specific integrated circuits (ASICs), printed circuit boards (PCBs), and electronic devices, etc. The processors and transceivers can also be produced using various IC process technologies, such as complementary metal oxide semiconductor (CMOS), nMetal-oxide-semiconductor (NMOS), positive channel metal oxide semiconductor (PMOS), bipolar junction transistor (BJT), bipolar CMOS (BiCMOS), silicon-germanium (SiGe), gallium arsenide (GaAs) and so on.

The communication device in the above description of embodiments may be a network device or a terminal device, but the scope of the communication device described in the disclosure is not limited thereto. The communication device may be a stand-alone device or may be part of a large device. For example, the described communication device may be:
(1) a stand-alone IC, chip, chip system or subsystem;
(2) a set of one or more ICs, optionally, the set may also include storage components for storing data and computer programs;
(3) an ASIC, such as a modem;
(4) modules that can be embedded within other devices;
(5) receivers, terminal devices, smart terminal devices, cellular phones, wireless devices, handheld machines, mobile units, in-vehicle devices, network devices, cloud devices, artificial intelligence devices, and the like; and
(6) others.

In the case where the communication device may be a chip or a chip system, the chip may include a processor and an interface. There may be one or more processors, and there may be multiple interfaces.

Optionally, the chip further includes a memory used to store necessary computer programs and data.

It is understandable by those skilled in the art that various illustrative logical blocks and steps listed in the embodiments of the disclosure may be implemented by electronic hardware, computer software, or a combination of both. Whether such function is implemented by hardware or software depends on the particular application and the design requirement of the entire system. Those skilled in the art may, for each particular application, use various methods to implement the described function, but such implementation should not be construed as being beyond the scope of protection of the embodiments of the disclosure.

The disclosure also provides a readable storage medium having instructions stored thereon. When the instructions are executed by a computer, the function of any of the method embodiments described above is implemented.

The disclosure also provides a computer program product. When the computer program product is executed by a computer, the function of any of the method embodiments described above is implemented.

The above embodiments may be implemented in whole or in part by software, hardware, firmware, or any combination thereof. When implemented using software, it may be implemented, in whole or in part, in the form of a computer program product. The computer program product includes one or more computer programs. When loading and executing the computer program on the computer, all or part of processes or functions described in the embodiments of the disclosure are implemented. The computer may be a general-purpose computer, a dedicated computer, a computer network, or other programmable devices. The computer program may be stored in a computer-readable storage medium or transmitted from one computer-readable storage medium to another computer-readable storage medium. For example, the computer program may be transmitted from one web site, computer, server, or data center to another web site, computer, server, or data center, in a wired manner (e.g., by using coaxial cables, fiber optics, or digital subscriber lines (DSLs)) or a wireless manner (e.g., by using infrared wave, wireless wave, or microwave). The computer-readable storage medium may be any usable medium to which the computer can access to or a data storage device such as a server or a data center integrated by one or more usable mediums. The usable medium may be a magnetic medium (e.g., floppy disk, hard disk, and tape), an optical medium (e.g., a high-density digital video disc (DVD)), or a semiconductor medium (e.g., a solid state disk (SSD)).

Those skilled in the art can understand that the first, second, and other various numerical numbers involved in the disclosure are only described for the convenience of differentiation, and are not used to limit the scope of the embodiments of the disclosure, or used to indicate the order of precedence.

The term "at least one" in the disclosure may also be described as one or more, and the term "multiple" may be two, three, four, or more, which is not limited in the disclosure. In the embodiments of the disclosure, for a type of technical features, "first", "second", and "third", and "A", "B", "C" and "D" are used to distinguish different technical features of the type, the technical features described using the "first", "second", and "third", and "A", "B", "C" and "D" do not indicate any order of precedence or magnitude.

The correspondences shown in the tables in this disclosure may be configured or may be predefined. The values of information in the tables are merely examples and may be configured to other values, which are not limited by the disclosure. In configuring the correspondence between the information and the parameter, it is not necessarily required that all the correspondences illustrated in the tables must be configured. For example, the correspondences illustrated in certain rows in the tables in this disclosure may not be configured. For another example, the above tables may be adjusted appropriately, such as splitting, combining, and the like. The names of the parameters shown in the titles of the above tables may be other names that can be understood by the communication device, and the values or representations of the parameters may be other values or representations that can be understood by the communication device. Each of the above tables may also be implemented with other data structures, such as, arrays, queues, containers, stacks, linear tables, pointers, chained lists, trees, graphs, structures, classes, heaps, and Hash tables.

The term "predefine" in this disclosure may be understood as define, define in advance, store, pre-store, pre-negotiate, pre-configure, solidify, or pre-fire.

Those skilled in the art may realize that the units and algorithmic steps of the various examples described in combination with the embodiments disclosed herein are capable of being implemented in the form of electronic hardware, or a combination of computer software and electronic hardware. Whether these functions are performed in the form of hardware or software depends on the specific application and design constraints of the technical solution. Those skilled in the art may use different methods to implement the described functions for each particular application, but such implementations should not be considered as beyond the scope of the disclosure.

It is clearly understood by those skilled in the art that, for the convenience and brevity of description, the specific working processes of the systems, apparatuses, and units described above can be referred to the corresponding processes in the preceding method embodiments, and will not be repeated herein.

The above are only specific implementations of the disclosure, but the scope of protection of the disclosure is not limited thereto. Those skilled in the art familiar to this technical field can easily think of changes or substitutions in the technical scope disclosed by the disclosure, which shall be covered by the scope of protection of the disclosure. Therefore, the scope of protection of the disclosure shall be governed by the scope of protection of the appended claims.

## Claims

1. An auxiliary configuration method, performed by a terminal device, comprising:
sending sidelink Discontinuous Reception (DRX) information to a network device, wherein the sidelink DRX information comprises sidelink DRX information of a designated sidelink address, and/or, sidelink DRX information of a designated sending mode.

2. The method of claim 1, wherein the designated sidelink address comprises at least one of: a broadcast address, a groupcast address, and a unicast address.

3. The method of claim 1 or 2, wherein the designated sidelink address satisfies at least one of following conditions:
the terminal device receiving information sent by the designated sidelink address;
the terminal device receiving information sent by the designated sidelink address and the terminal device not sending the designated sidelink address to the network device;
the terminal device receiving information sent by the designated sidelink address and the information being received using a sidelink DRX mechanism; or
the terminal device receiving information sent by the designated sidelink address, the information being received using the sidelink DRX mechanism, and the terminal device not sending the designated sidelink address to the network device.

4. The method of claim 3, wherein the terminal device determines whether to send the designated sidelink address to the network device according to at least one of:
whether the terminal device carries the designated sidelink address in a sidelink terminal device message sent to the network device; or
whether the terminal device carries the sidelink address in a sidelink sending resource request sent to the network device.

5. The method of claim 1, wherein the sidelink DRX information comprises at least one of:
Quality of Service (QoS) characteristic information of a transmission service on the designated sidelink address;
sidelink DRX configuration information on the designated sidelink address;
first indication information for indicating whether the designated sidelink address uses a sidelink DRX mechanism; or
second indication information for indicating whether a designated terminal device exists, wherein the designated terminal device receives information sent by the designated sidelink address and conforms to an R16 standard.

6. The method of claim 5, wherein the QoS characteristic information comprises at least one of:
QoS requirement information; or
an index number in a PC5 QoS Identifier (PQI) list, wherein the index number has corresponding QoS requirement information.

7. The method of claim 1, wherein the designated sending mode comprises at least one of: a broadcast sending mode, a groupcast sending mode, and a unicast sending mode.

8. The method of claim 1 or 7, wherein the sidelink DRX information of the designated sending mode is determined according to sidelink DRX information of a designated sidelink address having the designated sending mode.

9. The method of claim 8, wherein the sidelink DRX information of the designated sending mode is a collection of the sidelink DRX information of the designated sidelink address having the designated sending mode.

10. An auxiliary configuration method, performed by a network device, comprising:
receiving sidelink Discontinuous Reception (DRX) information sent by a terminal device, wherein the sidelink DRX information comprises sidelink DRX information of a designated sidelink address, and/or, sidelink DRX information of a designated sending mode.

11. The method of claim 10, further comprising:
performing Uu DRX configuration processing on the terminal device according to the sidelink DRX information.

12. The method of claim 10, wherein the designated sidelink address comprises at least one of: a broadcast address, a groupcast address, and a unicast address.

13. The method of claim 10 or 12, wherein the designated sidelink address satisfies at least one of following conditions:
the terminal device receiving information sent by the designated sidelink address;
the terminal device receiving information sent by the designated sidelink address and the terminal device not sending the designated sidelink address to the network device;
the terminal device receiving information sent by the designated sidelink address and the information being received using a sidelink DRX mechanism; or
the terminal device receiving information sent by the designated sidelink address, the information being received using the sidelink DRX mechanism, and the terminal device not sending the designated sidelink address to the network device.

14. The method of claim 13, wherein the terminal device determines whether to send the designated sidelink address to the network device according to at least one of:
whether the terminal device carries the designated sidelink address in a sidelink terminal device message sent to the network device; or
whether the terminal device carries the sidelink address in a sidelink sending resource request sent to the network device.

15. The method of claim 10, wherein the sidelink DRX information comprises at least one of:
Quality of Service (QoS) characteristic information of a transmission service on the designated sidelink address;
sidelink DRX configuration information on the designated sidelink address;
first indication information for indicating whether the designated sidelink address uses a sidelink DRX mechanism; or
second indication information for indicating whether a designated terminal device exists, wherein the designated terminal device receives information sent by the designated sidelink address and conforms to an R16 standard.

16. The method of claim 15, wherein the QoS characteristic information comprises at least one of:
QoS requirement information; or
an index number in a PC5 QoS Identifier (PQI) list, wherein the index number has corresponding QoS requirement information.

17. The method of claim 10, wherein the designated sending mode comprises at least one of: a broadcast sending mode, a groupcast sending mode, and a unicast sending mode.

18. The method of claim 10 or 17, wherein the sidelink DRX information of the designated sending mode is determined according to sidelink DRX information of a designated sidelink address having the designated sending mode.

19. The method of claim 18, wherein the sidelink DRX information of the designated sending mode is a collection of the sidelink DRX information of the designated sidelink address having the designated sending mode.

20. An auxiliary configuration apparatus, applied to a terminal device, comprising:
a transceiver unit, configured to send sidelink Discontinuous Reception (DRX) information to a network device, wherein the sidelink DRX information comprises sidelink DRX information of a designated sidelink address, and/or, sidelink DRX information of a designated sending mode.

21. An auxiliary configuration apparatus, applied to a network device, comprising:
a transceiver unit, configured to receive sidelink Discontinuous Reception (DRX) information sent by a terminal device, wherein the sidelink DRX information comprises sidelink DRX information of a designated sidelink address, and/or, sidelink DRX information of a designated sending mode.

22. A communication device, comprising a processor and a memory having a computer program stored thereon, wherein the processor executes the computer program to cause the device to perform the method of any one of claims 1-9.

23. A communication device, comprising a processor and a memory having computer program stored thereon, wherein the processor executes the computer program, to cause the device to perform the method of any one of claims 10-19.

24. A communication device, comprising: a processor and an interface circuit, wherein
the interface circuit is configured to receive code instructions and transmit the code instructions to the processor; and
the processor is configured to run the code instructions to perform the method of any one of claims 1-9.

25. A communication device, comprising: a processor and an interface circuit, wherein
the interface circuit is configured to receive code instructions and transmit the code instructions to the processor; and
the processor is configured to run the code instructions to perform the method of any one of claims 10-19.

26. A computer-readable storage medium having instructions stored thereon, wherein when the instructions are executed, the method of any one of claims 1-9 is implemented.

27. A computer-readable storage medium having instructions stored thereon, wherein when the instructions are executed, the method of any one of claims 10-19 is implemented.
